# EUROPEAN PATENT APPLICATION

(11) **EP 1 939 466 A1**
(43) Date of publication of application: **02.07.2008**
(21) Application number: 06256617.9
(22) Date of filing: 29.12.2006
(51) Int. Cl.: F16B 25/00, F16B 33/02

(54) **Screw**

(71) Applicant: Fong Prean Industrial Co., Ltd., Kaohsiung Hsien (TW)
(72) Inventor: Lin, Teng-Hung, Kaohsiung Hsien Taiwan (CN)
(74) Representative: Brown, Kenneth Richard

(57) **Abstract**

A screw having a first thread (2); the first thread (2) having a cutting thread (21) which is a greater helical angle than other portion of the first thread (2).

## Description

### FIELD OF THE INVENTION

The present invention relates to screws, and particularly to a screw having a first thread; a predetermined section of the first thread having a cutting thread which is a greater helical angle than other portion of the first thread. Thereby by the cutting thread, the dregs can be removed rapidly.

### BACKGROUND OF THE INVENTION

The removing of dreg is a main concern in the design of a screw because it is related to the operation speed and power required in driving a screw. If the dreg can be removed quickly, the twisting force in operation can be reduced greatly. Otherwise, the resisting force is greater. Thus, there are many designs for improving the removing the dregs of screws. Most of these designs are aimed at the threads of the screws. For example, two threads are sued or the helical angles of the thread is changed. However, these designs can not completely cancel the resisting force in the removing of the dregs from the screw.

### SUMMARY OF THE INVENTION

Accordingly, the primary object of the present invention is to provide a screw, in that dregs can be removed rapidly and smoothly.

To achieve above objects, the present invention provides a screw having a first thread; a predetermined section of the first thread having a cutting thread which is a greater helical angle than other portion of the first thread. Te cutting thread extends to a tapered portion of the screw, but not to a tip end of the screw. Or the cutting thread extends to the tip end of the tapered portion. Or the cutting thread is formed on a rod body of the screw, which do not extend to a tapered portion of the screw. The screw further comprise a second thread which is higher, or lower than the first thread or the second thread has same height as the first thread. The screw further comprises a second thread which is higher than the first thread. The screw further comprising a second thread which has the same height as the first thread, the second thread is formed with a cutting thread.

The various objects and advantages of the present invention will be more readily understood from the following detailed description when read in conjunction with the appended drawing.

### BRIEF DESCRIPTION OF THE DRAWINGS

Fig. 1 shows the first embodiment of the present invention.
Fig. 2 shows the second embodiment of the present invention.
Fig. 3 shows the third embodiment of the present invention.
Fig. 4 shows the fourth embodiment of the present invention.
Fig. 5 shows the fifth embodiment of the present invention.
Fig. 6 shows the sixth embodiment of the present invention.
Fig. 7 shows the seventh embodiment of the present invention.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

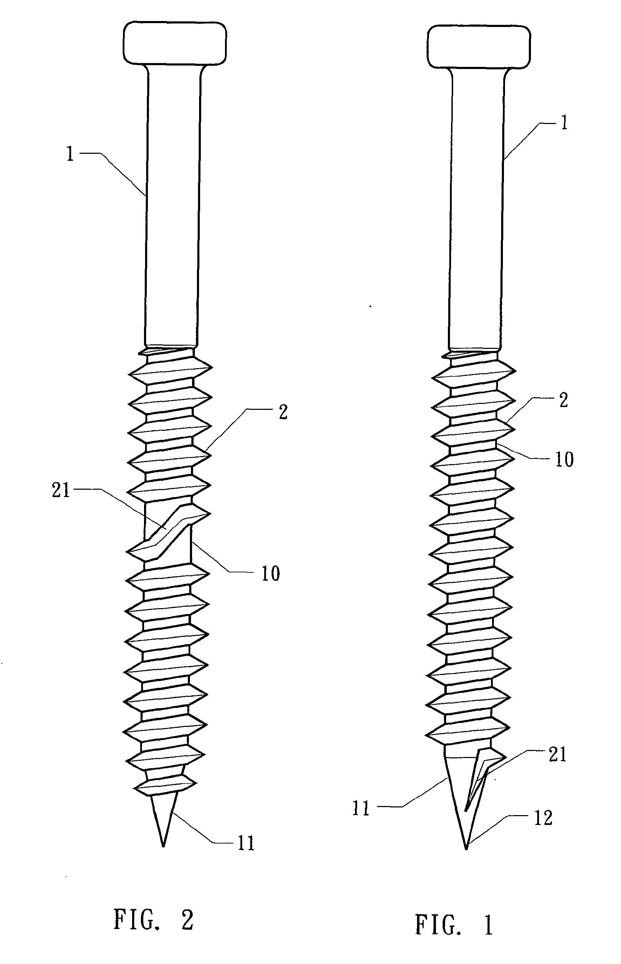

Referring to Fig. 1, the first embodiment of the screw of the present invention is illustrated. The screw 1 has a single thread 2. At a tapered head of the screw 1, the single thread 2 is formed as a cutting thread 21 which has a greater helical angle. Thereby by the cutting thread 21, the dregs can be removed rapidly. The cutting thread 21 can not extend to a tip end 12 of the screw 1.

Referring to Fig. 2, the second embodiment of the present invention is illustrated. The screw 1 has a single thread 2. In a non-tapered rod body 10 of the screw 1, the single thread 2 has a cutting thread 21 which has a greater helical angle. Thereby by the cutting thread 21, the dregs can be removed rapidly. The cutting thread 21 can not extend to a tip end 12 of the screw 1.

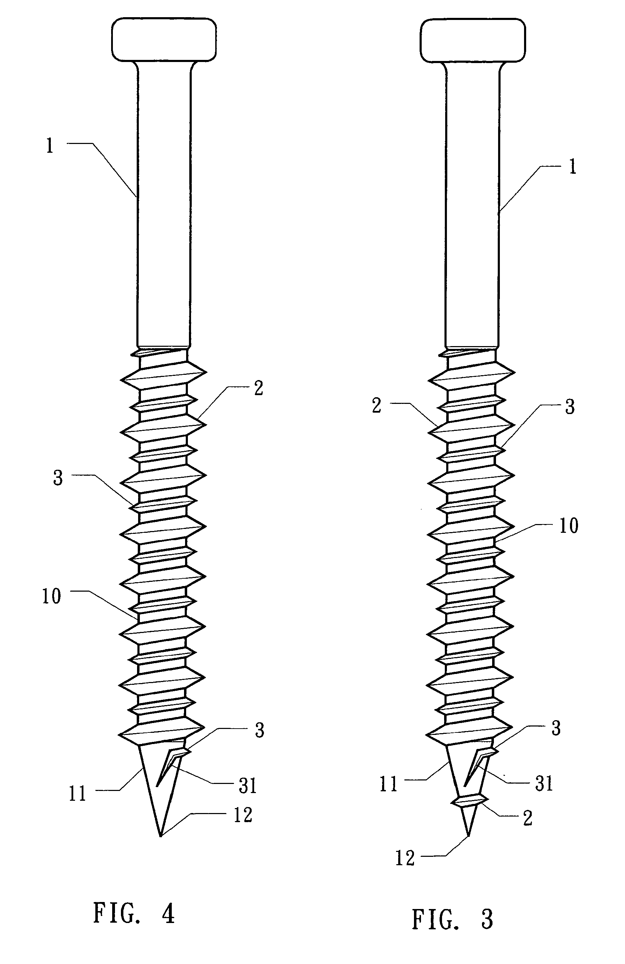

Referring to Figs. 3 and 4, the third embodiment of the present invention is illustrated. The screw 1 has a high thread 2 and a lower thread 3. The high thread 2 is higher than the lower thread 3. At a tapered head 11 of the screw 1, the low thread 3 is formed as a cutting thread 31 which has a greater helical angle. The cutting thread 31 do not extend to a tip end 12 of the screw 1. Thereby by the cutting thread 31, the dregs can be removed rapidly. The high thread 2 and lower thread 3 have the effect of anti-pulling force.

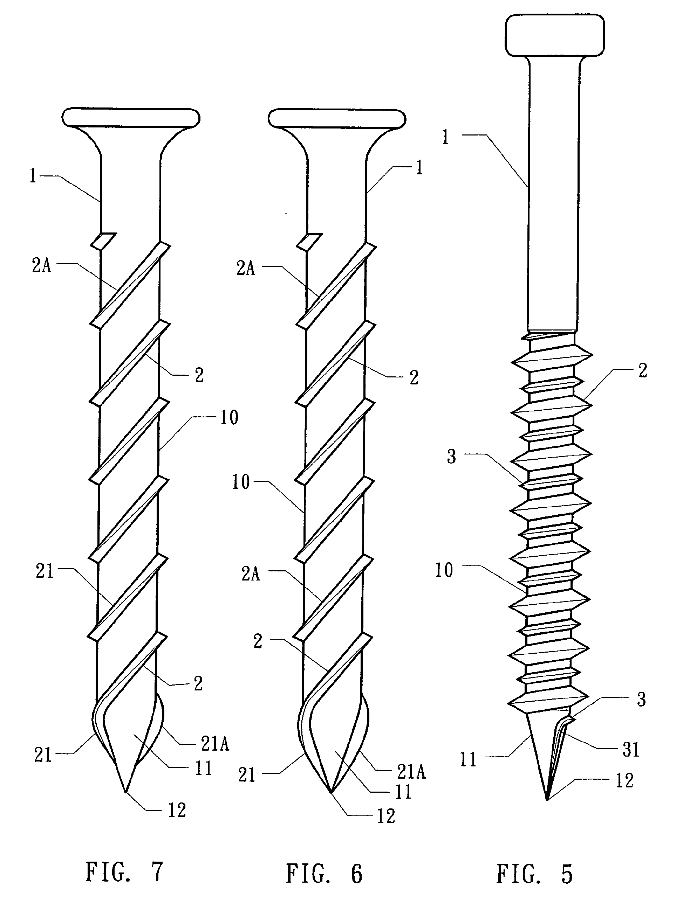

Referring to Fig. 5, the third embodiment of the present invention is illustrated. The screw 1 has a high thread 2 and a lower thread 3. The high thread 2 is higher than the lower thread 3. At a tapered head 11 of the screw 1, the low thread 3 is formed as a cutting thread 31 which has a greater helical angle. The cutting thread 31 extends to a tip end 12 of the screw 1. Thereby by the cutting thread 31, the dregs can be removed rapidly. The high thread 2 and lower thread 3 have the effect of anti-pulling force.

Referring to Fig. 6, the third embodiment of the present invention is illustrated. The screw 1 has a first high thread 2 and a second lower thread 2A. The first high thread 2 and second high thread 2A have the same height. At a tapered head 11 of the screw 1, the first and second high threads 2 and 2A are formed with cutting threads 21 and 21A which have greater helical angles. The cutting threads 21 and 21A extend to a tip end 12 of the screw 1. Thereby by the cutting thread 31, the dregs can be removed rapidly. The high thread 2 and lower thread 3 have the effect of anti-pulling force.

Referring to Fig. 7, the third embodiment of the present invention is illustrated. The screw 1 has a first high thread 2 and a second lower thread 2A. The first high thread 2 and second high thread 2A have the same height. At a tapered head 11 of the screw 1, the first and second high threads 2 and 2A are formed with cutting threads 21 and 21A which have greater helical angles. The cutting threads 21 and 21A do not extend to a tip end 12 of the screw 1. Thereby by the cutting thread 31, the dregs can be removed rapidly. The high thread 2 and lower thread 3 have the effect of anti-pulling force.

Advantages of the present invention is that:
1. The screw has the effect of removing dregs.
2. The screw of the present invention has a preferred anti-pulling force ability.
3. The structure of the present invention is simple and is economic.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A screw having a first thread; a predetermined section of the first thread having a cutting thread which is a greater helical angle than other portion of the first thread.

2. The screw as claimed in claim 1, wherein the cutting thread extends to a tapered portion of the screw, but not to a tip end of the screw.

3. The screw as claimed in claim 1, wherein the cutting thread extends to the tip end of the tapered portion.

4. The screw as claimed in claim 1, wherein the cutting thread is formed on a rod body of the screw, which do not extend to a tapered portion of the screw.

5. The screw as claimed in claim 1, further comprising a second thread which is higher, or lower than the first thread or the second thread has same height as the first thread.

6. The screw as claimed in claim 1, further comprising a second thread which is higher than the first thread.

7. The screw as claimed in claim 1, further comprising a second thread which has the same height as the first thread, the second thread is formed with a cutting thread.
